# EUROPEAN PATENT APPLICATION

(11) **EP 1 072 939 A2**
(43) Date of publication of application: **31.01.2001**
(21) Application number: 00116059.7
(22) Date of filing: 26.07.2000
(51) Int. Cl.: G02F 1/35

(54) **Wavelength conversion device**

(30) Priority: 27.07.1999 JP 21264099
(71) Applicant: Ushio Research Institute of Technology, Inc., Shizuoka-ken (JP)
(72) Inventor: Oosako, Yasu, Tsuzuki-ku Yokohama-shi, Kanagawa-ken (JP)
(74) Representative: Tomerius, Isabel, Dr. Dipl.-Chem.

(57) **Abstract**

A laser beam emitted by a laser beam source is focused by a beam focusing lens and is incident on a wavelength conversion component comprised of a non-linear optical crystal. The wavelength conversion component is arranged at the laser beam source side rather than the beam focusing position of the beam focusing lens. A part of the laser beam incident on the wavelength conversion component is converted in its wavelength and emitted by the wavelength conversion component. It was found that the laser beam emitted by the beam focusing lens shows a substantial rational Gaussian distribution up to the beam focusing position, but the shape of its spatial intensity distribution deteriorates from a location exceeding the beam focusing position. Accordingly, the wavelength conversion component is arranged at the beam focusing position. Therefore, no laser beams having a spike-like peak value of spatial intensity distribution are incident on it, and a long lifetime can be attained and the conversion efficiency can be improved.

## Description

### BACKGROUND OF THE INVENTION

### FIELD OF THE INVENTION

This invention relates to a wavelength conversion device applied in a machining laser device or an excitation light source for titanium sapphire laser and the like.

### DESCRIPTION OF RELATED ART

Lasers are used in machining processes, such as punching holes in a printed circuit board and cutting of a film and a metal or the like. The printed circuit board or resin or metal applied as a film material, which is a processed item, shows in general a higher absorption efficiency when the wavelength is shorter, and further, shows a superior processing efficiency. In addition, when the wavelength is shorter, this is more effective for a fine machining operation.
Due to this fact, the wavelength of the laser beam to be applied for the machining processing has become a short wavelength. In order to generate laser beams having a short wavelength, it is advantageous to use a wavelength conversion system operated with a non-linear optical crystal being applied as the wavelength conversion component.

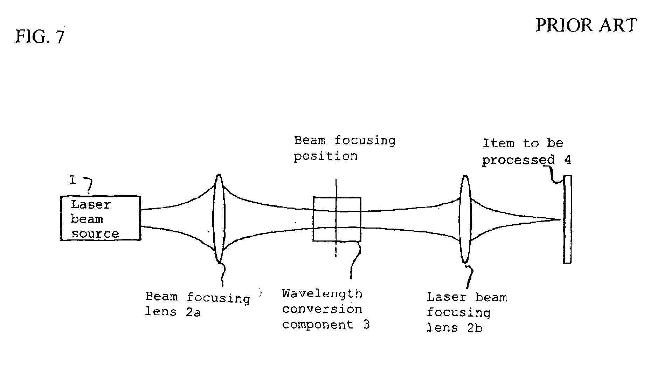

Fig. 7 schematic illustrates a configuration of a laser device for performing a machining process with a wavelength conversion process applied with a non-linear optical crystal.

The laser beam emitted by the laser beam source 1 is focused by a focusing lens 2a and is incident on a wavelength conversion component 3 comprised of a non-linear optical crystal. The wavelength of a part of the laser beam incident on the wavelength conversion component 3 is changed, emitted by the wavelength conversion component 3, the outputted laser beam is focused by a focusing lens 2b and radiated against an item to be processed 4. As the wavelength conversion component 3, for example, BBO, LBO and CLBO crystals and the like are used.

The laser beam incident on the wavelength conversion component 3 shows improved wavelength conversion efficiency when the beam is focused to cause the power density to be increased (as the sectional area of laser beam incident on the wavelength conversion component is small). Accordingly, the laser beam incident side of the wavelength conversion component is usually provided with a beam shaping means, such as a lens and the like, for focusing the laser beam. In case of the device shown in Fig.7, the beam focusing lens 2a corresponds to the aforesaid beam shaping means.

In the prior art device, the wavelength conversion component 3 was installed at a position where the sectional area of the laser beam incident on the wavelength conversion component 3 is smallest, i.e., the position where the laser beam is focused most in order to improve a wavelength conversion efficiency.

As described above, the prior art unit was constructed such that the wavelength conversion component was arranged at a position where the laser beam was focused most (near the focusing point of the focusing lens). However, when the laser beam having a high power density is incident on the non-linear optical crystal used as the wavelength conversion component, certain damage may occur in the non-linear optical crystal, causing its lifetime to be shortened. In view of the foregoing, the arrangement of the wavelength conversion component was studied in various manners and it was found that the element had the following problems:
(1) A certain damage may occur in the non-linear optical crystal in accordance with the mounting position of the wavelength conversion component and its lifetime is shortened;
(2) The laser power emitted by the wavelength conversion component is smaller than that expected. The reason for this being that the conversion efficiency of the wavelength conversion component is lower than the estimated value.

### SUMMARY OF THE INVENTION

In view of the aforesaid circumstances, it is a primary object of the present invention to provide a wavelength conversion component in which a long lifetime of the wavelength conversion component can be realized and the conversion efficiency of the wavelength conversion component can be improved.

The present inventor measured the strength distribution of the laser beam focused by the beam-focusing lens, and the following became apparent.

Although the laser beam emitted by the beam-focusing lens shows a substantially rational Gaussian distribution up to the beam focusing position (the focusing point position of the focusing lens), a peak value of a shoulder or spike-like (saw-tooth) peak value appears in a location different from the beam focusing position, resulting in the shape of the spatial intensity distribution being deteriorated.

In addition, when the laser beam emitted by the aforesaid first beam-focusing lens is incident on a second beam-focusing lens and its spatial intensity distribution is checked, the laser beam emitted by the second focusing lens has a deteriorated shape of spatial intensity distribution up to the beam focusing position and the peak value of a shoulder or spike-like (saw-tooth) value appears, although the spatial intensity distribution becomes improved as it exceeds the beam focusing position and a substantially rational Gaussian distribution can be attained.

Disturbance of the aforesaid spatial intensity distribution is remarkable, in particular, in the case where a device for performing a lateral excitation is used as the laser beam source; the cause for this disturbance is not quite clear.

If the shape of the spatial intensity distribution of the laser deviates from the Gaussian distribution due to the appearance of a shoulder, the amount of laser beams incident on the wavelength conversion component having a lower power density is increased, resulting in the wavelength conversion efficiency being deteriorated and the power of the emitted laser beam being weakened. In addition, if there is a part where the strength of the laser beam is increased in a spike-like manner, the power density of that part is remarkably increased to apply a substantial damage to the non-linear optical crystal or its reflection-proof film or protection film and the like.

In view of the foregoing, in the present invention, the entire wavelength conversion component, including the input end and the output end, is arranged in a region where the spatial intensity distribution of the laser beam has no plurality of peak values or no shoulder (in case it is arranged at the output side of the aforesaid first focusing lens, it is placed nearer the laser beam source than the beam focusing position, and in case it is arranged at the output side of the second focusing lens, it is arranged at the output side rather than the beam focusing position) with respect to the laser beam focusing position. With such an arrangement as above, it is possible to attain a long lifetime of the wavelength conversion component and additionally the conversion efficiency can be improved.

Also, in the case that a plurality of wavelength conversion components are arranged at the output side of the beam-focusing lens, the plurality of wavelength conversion components are arranged within the aforesaid region.

The term "the spatial intensity distribution of the laser beam does not have a plurality of peaks or shoulders" is intended to mean in the context of this invention that "a two-dimensional section of the spatial intensity distribution of the laser beam has no local concave or convex segments or their combination in view of the spatial intensity distribution generated by a non-uniform beam refraction".

As described above, the present invention is constructed such that the entire wavelength conversion component including the input end and the output end is installed in a region where the spatial intensity distribution of the laser beam has no plurality of peak values or shoulders, so that it is possible to cause a laser beam having a substantially rational Gaussian distribution to be incident on the wavelength conversion component so that a long lifetime of the wavelength conversion component can be attained and the wavelength conversion efficiency can be improved.

### BRIEF DESCRIPTION OF THE DRAWINGS

Fig. 1 is a view schematically showing a configuration of a wavelength conversion device in accordance with a first preferred embodiment of the present invention.
Fig. 2 is a view showing the spatial intensity distribution of a laser beam at each of the output positions at a laser-focusing lens.
Fig. 3 is a view showing the spatial intensity distribution of a laser beam at each of the output positions at a laser-focusing lens.
Fig. 4 is a view showing a second preferred embodiment of the present invention.
Fig. 5 is a view showing a third preferred embodiment of the present invention.
Fig. 6 is a view showing a fourth preferred embodiment of the present invention.
Fig. 7 is a view showing a schematic configuration of a conventional device for machining with a laser beam, the wavelength of which is converted.

### DETAILED DESCRIPTION OF THE INVENTION

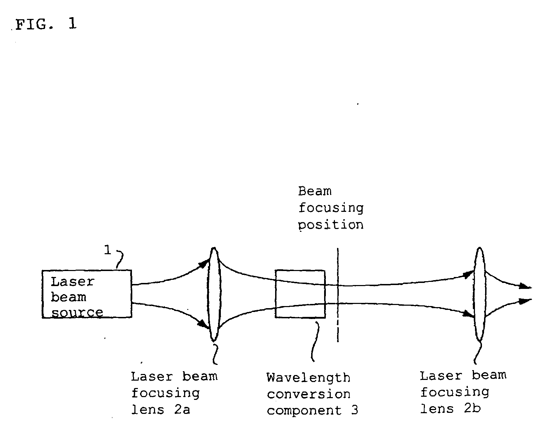

Fig. 1 is a view showing a schematic configuration of a wavelength conversion device in accordance with a first preferred embodiment of the present invention.

As shown in this figure, a first beam-focusing lens 2a focuses the laser beam emitted by a laser beam source 1, and the laser beam is incident on a wavelength conversion component 3 comprised of a non-linear optical crystal. The entire crystal of the wavelength conversion component 3, including the input end and the output end, is arranged at the beam source side rather than the beam focusing position of the beam focusing lens 2a.

A part of the laser beam incident on the wavelength conversion component 3 is converted in its wavelength. The beam emitted by the wavelength conversion component 3 is focused by the second beam focusing lens 2b, and for example, as shown in Fig. 7, the beam is radiated against the item to be processed.

In addition, with the non-linear optical crystal used as the wavelength conversion component 3, the outputted laser power is changed as the temperature and the phase alignment angle (the angle where the laser beam is incident against the crystal) are changed, the outputted laser power is also changed. Therefore, the wavelength conversion component 3 is heated or cooled with a heating means or a cooling means (not shown) and kept at a specified temperature. In addition, there is provided an angle adjustment means for adjusting the angle of the wavelength conversion component 3.

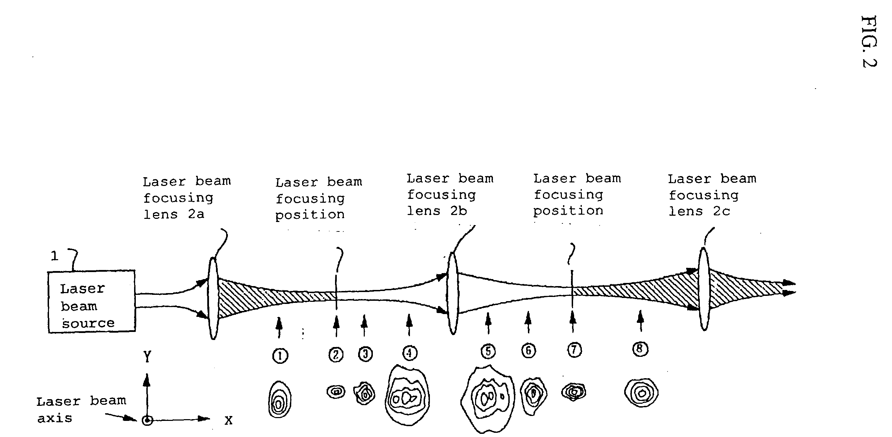

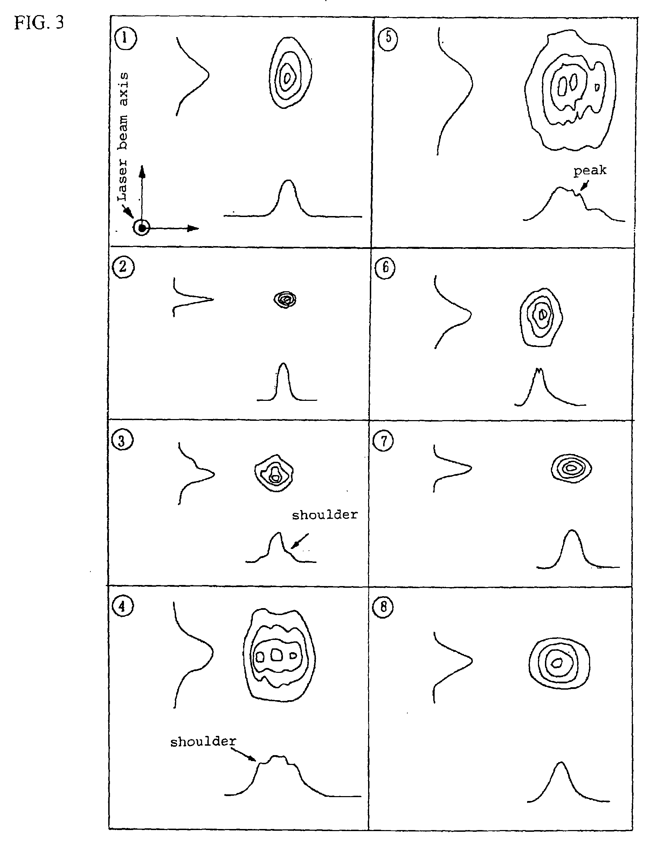

Figs. 2 & 3 illustrate the results of measuring the spatial intensity distribution of the laser beam emitted by the beam-focusing lens. Fig.2 illustrates the spatial intensity distribution (the strength distribution on a plane perpendicular to the optical axis of the laser beam) at each of the positions **1** to **8**. Fig.3 illustrates the strength distribution at each of the positions **1** to **8** of Fig. 2 (upper right in each section of this figure), a strength distribution on a plane in a direction X including the optical axis (upper right in each section of this figure) and a strength distribution on the plane in a direction Y including the optical axis (lower left in each section of Fig. 3).

As shown in Figs.2 and 3, the laser beam emitted by the first beam focusing lens 2a shows a substantially rational Gaussian distribution at the position **1** up to the beam focusing position, although the shape of the spatial intensity distribution deteriorates at the positions **3**, **4** past the beam focusing position.

The laser beam emitted by the second beam focusing lens 2b shows a deteriorated shape of the spatial intensity distribution at the positions **5** and **6** up to the beam focusing position and spike-like (saw-tooth) peaks appear, although the shape of the spatial intensity distribution at the position **8** downstream of the beam focusing position resumes a substantially rational Gaussian distribution. In addition, the arrangement shown in Fig.2 indicates the region where the spatial intensity distribution of the laser beam has no peak value or shoulder with hatched or slant lines.

As described above, the spatial intensity distributions of the laser beams emitted by the beam focusing lenses 2a, 2b are different from each other after or before the beam focusing position of the beam focusing lens, and does not necessarily have a constant spatial intensity distribution.

Further, Figs. 2 & 3 show the spatial intensity distribution in the case where first and second beam focusing lenses 2a, 2b are used; although, if a third beam focusing lens 2c is arranged at the output side of the second beam focusing lens 2a in the same manner as described above, the spatial intensity distribution of the laser beam emitted by the third beam focusing lens 2c indicates a substantial rational Gaussian distribution, the shape of the spatial intensity distribution becomes bad from a location passing through the beam focusing position. Further, in the case where a fourth beam focusing lens 2c is arranged at the output side of the third beam focusing lens, the spatial intensity distribution of the laser beam emitted by the fourth beam focusing lens shows a bad shape of the spatial intensity distribution up to the beam focusing position, although the shape of the spatial intensity distribution from the location where it passes through the beam focusing position recovers a substantial rational Gaussian distribution. Similar patterns are repeatedly realized.

In the preferred embodiment shown in Fig.1 above, the entire wavelength conversion component 3, including the input end and the output end, is arranged at the beam source side rather than at the beam focusing position of the beam focusing lens 2a, i.e., the region where the spatial intensity distribution of the laser beam does not have a plurality of peaks or shoulders. Due to this fact, as apparent from Figs.2 & 3, the spatial intensity distribution of the laser beam incident on the wavelength conversion component 3 has a substantial rational Gaussian distribution having neither peaks nor shoulders, enabling the wavelength conversion component to attain a long life and conversion efficiency to be improved.

In the preferred embodiment described above, although a wavelength conversion device using one wavelength conversion component has been indicated, the present invention can also be applied to a wavelength conversion device using a plurality of wavelength conversion components. An example of a modification of the aforesaid preferred embodiment will now be described.

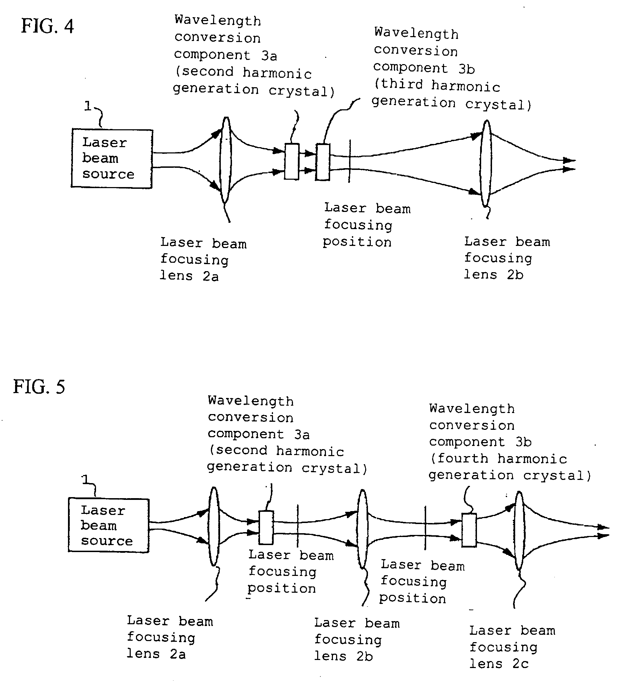

Fig. 4 shows a second preferred embodiment of the present invention. This preferred embodiment indicates a case in which the output side of the beam focusing lens 2a is provided with a plurality of wavelength conversion components.

In this figure, the laser beam emitted by the laser beam source 1 is focused by the first beam focusing lens 2a and further is incident on the wavelength conversion component ("second harmonic generation crystal" for generating a second harmonic) 3a and the wavelength conversion component ("third harmonic generation crystal" for generating a third harmonic) 3b comprised of non-linear optical crystals in sequence. The wavelength conversion component (second harmonic generation crystal) 3a and the wavelength conversion component (third harmonic generation crystal) 3b are arranged such that the entire crystal, including an input end and an output end, is installed at the beam source side rather than the beam focusing position of the beam focusing lens 2a, i.e., the region where the spatial intensity distribution of the laser beam does not have a plurality of peaks or shoulders.

The wavelength conversion component 3a converts the incident laser beam into a second harmonic and the wavelength conversion component 3b converts the incident laser beam into the third harmonic. The second laser beam focusing lens 2b focuses the laser beam emitted by the wavelength conversion component 3b, and the focused laser beam is radiated against the processed item as shown in Fig.7, for example.

In the preferred embodiment, all the wavelength conversion components 3a, 3b, including the input end and the output end as described above, are arranged at the laser beam source rather than at the laser beam focusing position of the laser beam focusing lens 2a.

Due to this fact, as described above, the spatial intensity distribution of the laser beam incident on the wavelength conversion components 3a, 3b becomes a substantially rational Gaussian distribution having no peak or shoulder values, so that a long lifetime of the wavelength conversion component can be attained and the conversion efficiency can be improved.

Fig. 5 shows a third preferred embodiment of the present invention indicating a case in which each of the output sides of the beam focusing lenses 2a, 2b is provided with wavelength conversion components 3a, 3b, respectively.

In this figure, the first beam focusing lens 2a focuses the laser beam emitted by the laser beam source 1, and the focused laser beam is incident on the wavelength conversion component (the second harmonic generation crystal) 3a comprised of a non-linear optical crystal. The entire crystal, including an input end and an output end of the wavelength conversion component 3a, is arranged at the beam source side rather than the laser beam focusing position of the first beam focusing lens 2a, and then, the wavelength conversion component 3a converts the incident laser beam into a second harmonic laser beam.

The second laser beam focusing lens 2b focuses the laser beam emitted by the wavelength conversion component 3a, and the focused laser beam is incident on the wavelength conversion component (the third harmonic generation crystal) 3b comprised of the non-linear optical crystal. The entire crystal including an input end and an output end of the wavelength conversion component 3b is arranged at the beam output side rather than the laser beam focusing position of the first beam focusing lens 2a, and then the wavelength conversion component 3b converts the incident laser beam into a third harmonic laser beam.

The second laser beam focusing lens 2c focuses the laser beam emitted by the wavelength conversion component 3b, and the focused laser beam is radiated against an item to be processed as shown in Fig.7, for example.

In the present preferred embodiment, the entire wavelength conversion component 3a, including an input end and an output end as described above, is arranged at the laser beam source side rather than the laser beam focusing position of the first laser beam focusing lens 2a, including an input end and an output end, and the entire wavelength conversion component 3b is arranged at the output side rather than at the laser beam focusing position of the second laser beam focusing lens 2b including the input end and the output end.

Due to this fact, as described above, the spatial intensity distribution of the laser beam incident on the wavelength conversion components 3a, 3b becomes a substantially rational Gaussian distribution having no peak value or shoulder part, resulting in it being possible to attain a long lifetime for the wavelength conversion component and to further improve the conversion efficiency.

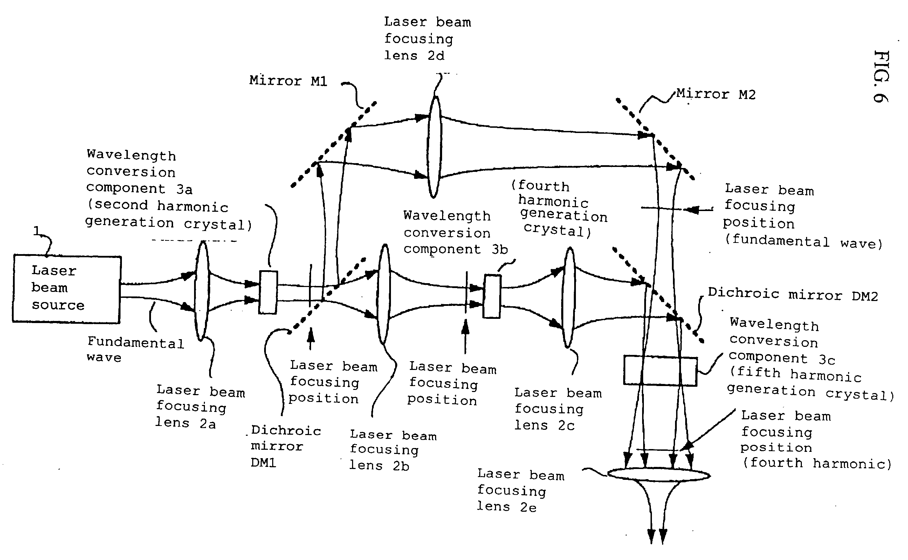

Fig. 6 is a view showing a fourth preferred embodiment of the present invention indicating a preferred embodiment for generating a fifth harmonic wave by mixing the fundamental wave with a fourth harmonic in view of their frequencies.

In this figure, the laser beam (the fundamental wave) emitted by the laser beam source 1 is focused through the laser beam focusing lens 2a and is incident on the first wavelength conversion component (second harmonic generation crystal) 3a. The first wavelength conversion component 3a may convert a part of the incident fundamental wave laser beam in its wavelength to generate a second harmonic laser beam.

The laser beam emitted by the first wavelength conversion component 3a is incident on a dichroic mirror DM1. The dichroic mirror DM1 reflects the fundamental wave passed without being converted by the first wavelength conversion component and allows the aforesaid second harmonic to pass. The fundamental wave reflected by the dichroic mirror DM1 is incident on the laser beam focusing lens 2d through the mirror M1, is focused there and is further incident on the third wavelength conversion component ("fifth harmonic generation crystal" for generating a fifth harmonic) 3c through the dichroic mirror DM2.

In turn, the laser beam of the second harmonic passed through the dichroic mirror DM1 is incident on the laser beam-focusing lens 2b and is focused there, resulting in the laser beam being incident on the second wavelength conversion component ("fourth harmonic generation crystal") 3b. The second wavelength conversion component 3b may generate a fourth harmonic of the aforesaid fundamental wave.

The laser beam outputted by the second wavelength conversion component 3b is focused by the laser beam focusing lens 2c, reflected by the dichroic mirror DM2 and then the laser beam is incident on the third wavelength conversion component 3c. The third wavelength conversion component 3c mixes the fundamental wave focused by the aforesaid beam focusing lens 2d with the fourth harmonic beam focused by the aforesaid beam focusing lens 2c in their frequencies so as to generate the fifth harmonic of the fundamental wave. The focusing lens 2e focuses the laser beam emitted by the third wavelength conversion component 3c and this beam is radiated against the item to be processed as described above, for example.

In this case, the aforesaid first wavelength conversion component 3a is arranged at the laser beam source 1 rather than the laser beam focusing position of the laser beam focusing lens 2a, and the second wavelength conversion component 3b is arranged at the output side rather than at the laser beam focusing position of the laser beam focusing lens 2b. Further, the third wavelength conversion component 3c is set at the output side rather than the laser beam focusing position of the laser beam-focusing lens 2d and is installed at the laser beam source 1 rather than the laser beam focusing position of the laser beam-focusing lens 2c.

Due to this fact, the spatial intensity distribution of the laser beam that is incident on each of the first to third wavelength conversion components 3a to 3c becomes a substantially rational Gaussian distribution as described above. Accordingly, it is possible to attain a long lifetime of these wavelength conversion components and further it is possible to improve conversion efficiency.

Further, although in the aforesaid preferred embodiment, the fundamental wave is branched off with the dichroic mirror DM1 and the fundamental wave is incident on the third wavelength conversion component 3c through the mirror M1, the beam focusing lens 2d, the mirror M2 and the dichroic mirror DM2, it may also be applicable that a laser beam source for generating the fundamental wave is separately arranged, the fundamental wave emitted by the laser beam source is focused and incident on the third wavelength conversion component 3c. In this case, the third non-linear optical crystal 3c is arranged at the laser beam source rather than the laser beam focusing position where the laser beam outputted by the aforesaid laser beam source is focused.

While various embodiments in accordance with the present invention have been shown and described, it is understood that the invention is not limited thereto, and is susceptible to numerous changes and modifications as known to those skilled in the art. Therefore, this invention is not limited to the details shown and described herein, and includes all such changes and modifications as are encompassed by the scope of the appended claims.

## Claims

1. A wavelength conversion device comprising a focusing lens for focusing a laser beam and a wavelength conversion component arranged in a beam path of the laser beam emitted from the focusing lens to perform a wavelength conversion thereof, wherein:
said wavelength conversion component has an input end and an output end, both of which are arranged within a region where a spatial intensity distribution of the laser beam does not have a plurality of peak values or shoulders.

2. A wavelength conversion device according to Claim 1, wherein a plurality of wavelength conversion components are arranged in said region.

3. A wavelength conversion device according to Claim 1 or 2, wherein the wavelength conversion component is comprised of at least one non-linear optical crystal.

4. A wavelength conversion device according to Claim 3, wherein the non-linear optical crystal is a BBO, LBO or CLBO crystal.
